# EUROPEAN PATENT APPLICATION

(11) **EP 2 990 550 A1**
(43) Date of publication of application: **02.03.2016**
(21) Application number: 15174467.9
(22) Date of filing: 30.06.2015
(51) Int. Cl.: E03F 5/04, E03F 7/06, E03C 1/294

(54) **BUG-PROOF AND ODOR-PROOF DRAINAGE DEVICE AND SYSTEM THEREOF**

(30) Priority: 29.08.2014 TW 103215487 U
(71) Applicant: Chen, Yung-Chuan, Hsinchu City 30063 (TW)
(72) Inventor: Chen, Yung-Chuan, Hsinchu City 30063 (TW)
(74) Representative: Viering, Jentschura & Partner mbB Patent- und Rechtsanwälte

(57) **Abstract**

A bug-proof and odor-proof drainage device (A) includes a cover (1), a base (2), and a connecting pipe (6) connecting plural bases (2) of different bug-proof and odor-proof drainage device (A). The cover (1) has plural draining holes (11) arranged in intervals. A capping (12) is disposed on the bottom surface of the cover (1). The base (2) has a through hole (21) surrounded by a wall part (22) extending upward. The base (2) is embedded in floors of bathrooms and kitchens and connected to a draining pipe (5) through the through hole (21) and also connected to different bases (21) by the connecting pipe (6). Water flows into the base (2), and then circuitously sinks to flow over the wall part (22) and rises along the wall part (22), thereby flowing into the draining pipe (5) from the through hole (21), such that a portion of water is stored within the base (2) for preventing bugs and odor from entering through the draining holes (11).

## Description

### BACKGROUND OF THE INVENTION

### 1. Field of the Invention:

The present invention relates to bug-proof and odor-proof drainage devices, and more particularly, to a drainage device applying the water stored thereof and to prevent bugs and odor from entering the house therethrough.

### 2. Description of the Related Art:

A traditional floor drain applied on the floor of bathroom or kitchen is often provided with a cover having plural draining holes. During the draining process, the water flows through the draining holes into the draining pipe thereof, and the draining holes are able to block the waste. A conventional floor drain is permanently open, such that bugs such as tiny cockroaches are allowed to enter from the draining pipe through the draining holes of the floor drain into the house; also, odor produced in the draining pipe is released from the draining holes, causing a household issue. Therefore, after continuous research and experiment, an improved bug-proof and odor-proof drainage device is provided, thereby preventing bugs and odor from entering through the draining holes.

### SUMMARY OF THE INVENTION

For improving the aforementioned issues, the present invention provides a bug-proof and odor-proof drainage device And system thereof. By using the water stored in the device, bugs and odor are blocked and prevented from entering through the draining holes thereof, achieving a bug-proof and odor-proof effect.

The bug-proof and odor-proof drainage device comprises:
a cover;
a base; and
a connect pipe, connected to the base.

The cover is provided with plural draining holes arranged in intervals. A cap-shaped capping is disposed on the bottom surface of the cover. The base has a through hole. A wall part extends upward to reach an appropriate height from the through hole. The base is embedded in the floor of a bathroom or kitchen, wherein the base is connected to the draining pipe through the through hole; also, the base is allowed to be connected to the base of other drainage device through the connect pipe. During the draining process, water flows through the draining holes of the cover into the base, and then circuitously sinks to flow over the wall part and rises along the wall part, so as to flow into the draining pipe from the through hole, whereby a certain height of water is stored within the base to facilitate a blockage function. As a result, bugs and odor are prevented from entering the room through the draining holes, such that the bug-proof and odor-proof effect is achieved.

Also, in the drainage device provided by the present invention, the top edge of the wall part of the base is higher than the bottom edge of the capping by an appropriate height, so as to form a circuity space.

The present invention further provides a bug-proof and odor-proof drainage system, comprising:
a plurality of bases, each base provided with a through hole connected to a draining pipe, a wall part surrounding the through hole and extending upward for an appropriate height;
a plurality of covers, each cover provided with plural draining holes arranged in intervals, a cap-shaped capping disposed on a bottom surface of each of the cover, each capping masking the corresponding wall part, such that the top edge of each wall part is higher than the bottom edge of the corresponding capping;
a connecting pipe, connected to each of the bases; and
a water pipe, disposed on the water flowing route of the connecting pipe and connected to the connecting pipe.

Thus, a vacuum water filling effect provided by a water tank keeps the connecting pipe to contain water.

### BRIEF DESCRIPTION OF THE DRAWINGS

**Fig. 1** is an exploded view of the bug-proof and odor-proof drainage device in accordance with the present invention.
**Fig. 2** is a sectional view of the present invention.
**Fig. 3** is a schematic view illustrating the operation status of the present invention.
**Fig. 4** is a schematic view illustrating the installation status of the present invention.
**Fig. 5** is a sectional view of a second embodiment of the present invention showing the connecting pipe disposed with the water tank.
**Fig. 6** is a schematic view of the second embodiment illustrating the installation status of the drainage system of the present invention.

### DETAILED DESCRIPTION OF THE INVENTION

The aforementioned and further advantages and features of the present invention will be understood by reference to the description of the preferred embodiment in conjunction with the accompanying drawings.

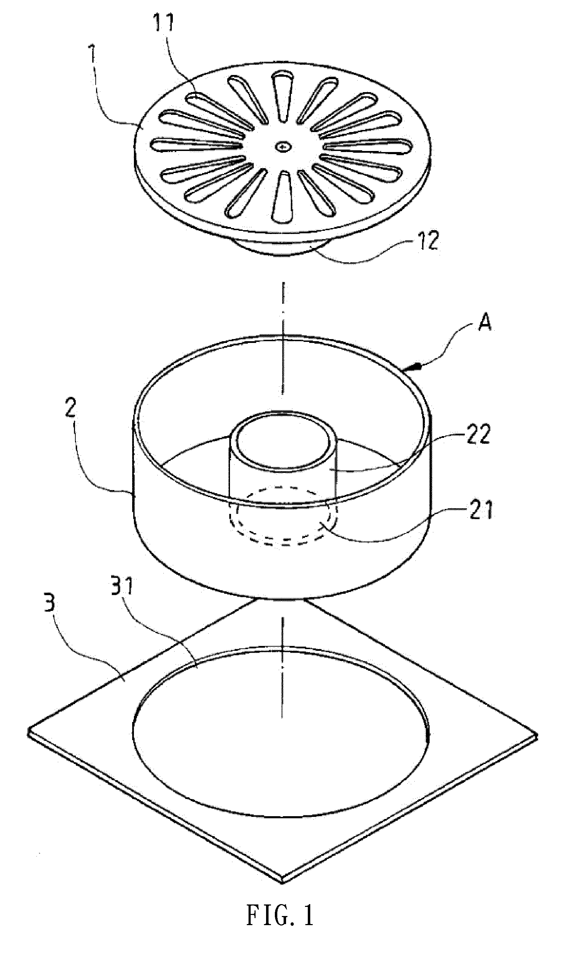

Referring to **Fig. 1****,** the present invention comprises a cover **1,** a base **2,** and a lid part **3.** The cover **1** is provided with plural draining holes **11** arranged in intervals. A cap-shaped capping **12** is disposed on the bottom surface of the cover **1.** The base **2** has a through hole **21,** and the through hole **21** is surrounded by a wall part **22** extending upward therefrom for an appropriate height. The lid part **3** is provided with an opening **31** for correspondingly receiving the cover **1.**

With the configuration of the components aforementioned, a bug-proof and odor-proof drainage device A is formed. During the installation process, the lid part **3** of the bug-proof and odor-proof drainage device A is to be installed on the floor of different places such as a bathroom or a kitchen, and the base **2** is thereby embedded in a recess **4** disposed in the floor. After connecting the through hole **21** with a draining pipe 5 and placing the cover 1 on the opening **31** of the lid part 3, the capping **12** is put into the base **2** and thereby masks the wall part **22.** In the water draining process, water is able to firstly flow into the base **2** through the draining holes **11** of the cover **1,** and then circuitously sinks to flow over the wall part **22** and rises along the wall part **22,** so as to finally flow into the draining pipe 5 from the through hole **21,** whereby a certain height of water is stored within the base **2** to facilitate a blockage function. Therefore, bugs and odor are prevented from entering the room from the draining holes **11,** such that the bug-proof and odor-proof effect are achieved. In the varied embodiments of the present invention, a larger size of the base **2** is allowed to be chosen for accelerating the draining process.

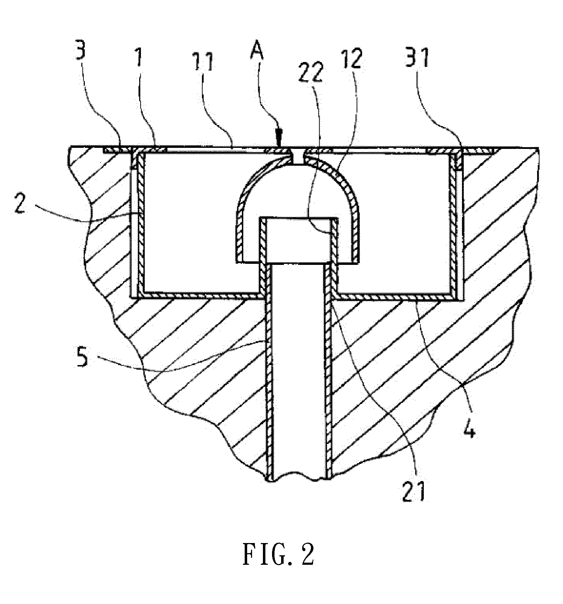

Referring to **Fig. 2****,** during the installation process, the base **2** of the bug-proof and odor-proof drainage device A is embedded in the recess **4** and connected to the draining pipe 5 through the through hole **21;** subsequently, the cover **1** together with the capping **12** are placed in through the opening **31** of the lid part **3.** After the cover **1** and the capping **12** are positioned, the capping **12** masks the wall part **22** of the base **2,** whereby the top edge of the wall part **22** is higher than the bottom edge of the capping **12** by an appropriate height, such that a circuity space is formed between the wall part **22** and the capping **12.** During the draining process, water flows into the base **2** through the draining holes **11** of the cover **1,** and then circuitously sinks to flow over the wall part **22** and rises along the wall part **22,** so as to finally flow into the draining pipe 5 from the through hole **21.**

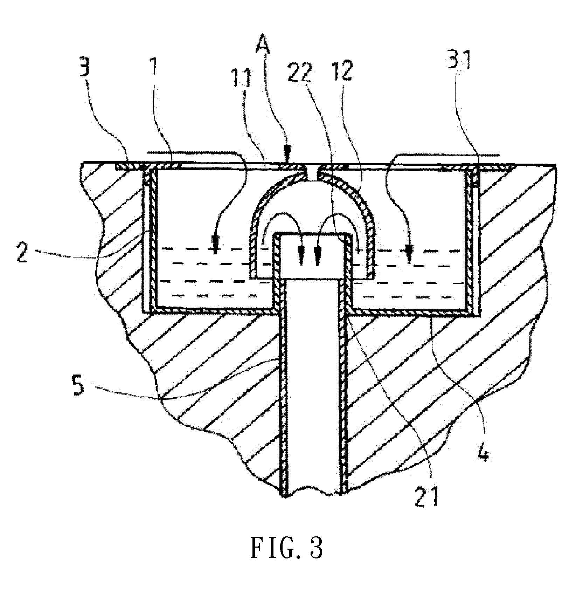

Referring to **Fig. 3****,** during the operation of the present invention, when water on the floor flows to the cover **1,** the water flows into the base **2** through the draining holes **11** of the cover **1.** When the water level rises over the wall part **22** of the base **2,** the water next flows into the draining pipe **5** from the through hole **21** to be discharged. When the water flow is stopped, a certain height of the water content is stored in the base **2(with** the water level slightly lower than the top edge of the wall part **22** of the base 2), so as to provide a blockage function for preventing bugs and odor from entering through the draining pipe 5 and the draining holes **11,** thus achieving a bug-proof and odor-proof function.

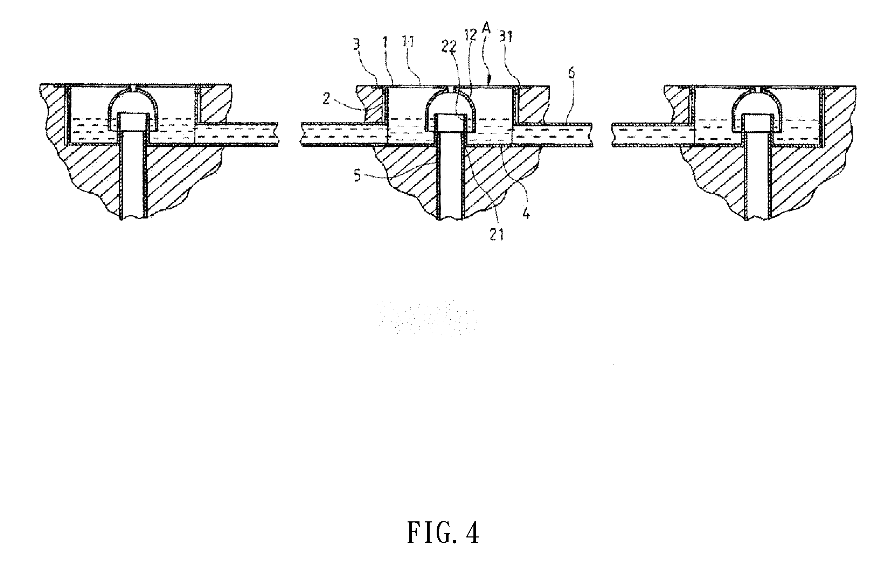

Referring to **Fig. 4****,** the present invention is provided with a connecting pipe **6.** When the base **2** of the bug-proof and odor-proof drainage device A is embedded in the recess **4** of floor, the connecting pipe **6** is applied to connect a plurality of bases **2** of different bug-proof and odor-proof drainage devices A in different places such as the bathroom and the kitchen, respectively, whereby all bases **2** are connected. Therefore, when one of the bug-proof and odor-proof drainage devices A is draining water, the water stored in the base **2** will be guided by the connecting pipe **6** and flow to other bases **2,** whereby the water stored in each of the bases **2** is kept, thus maintaining the blockage function to prevent bugs and odor from entering through the draining holes **11.**

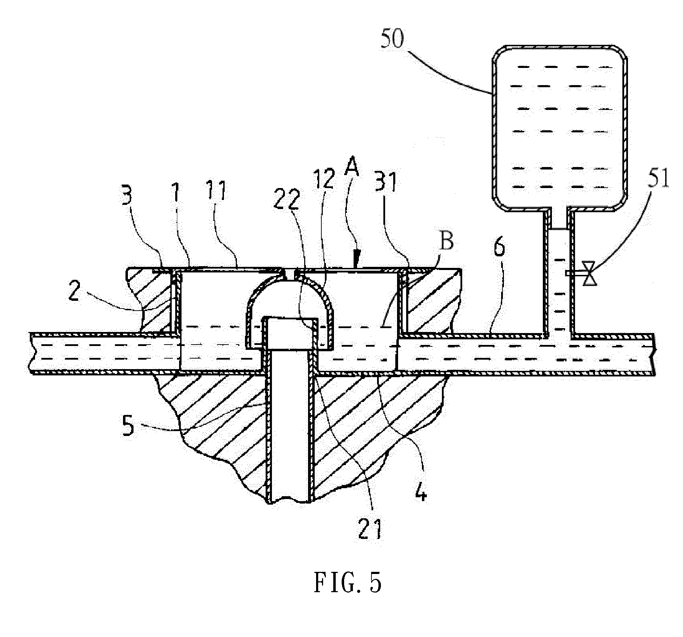

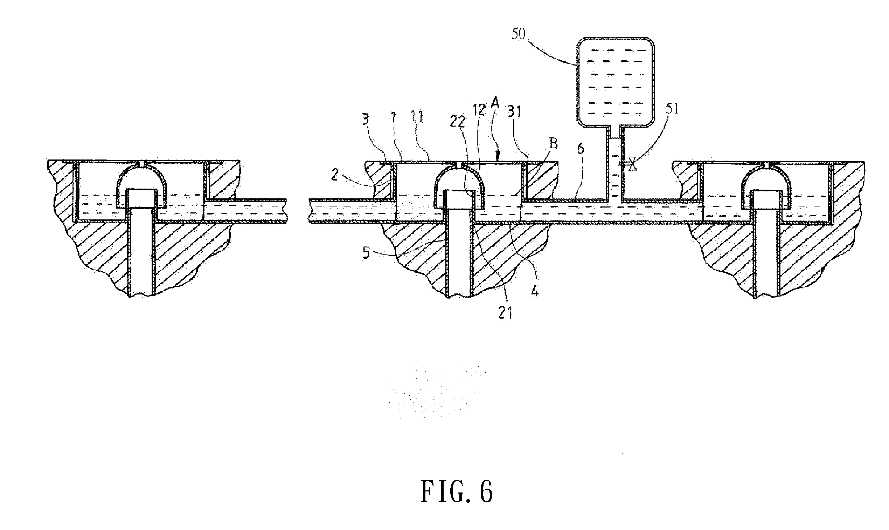

Referring to **Fig. 5** and **Fig. 6****,** another embodiment of the present invention further comprises a water tank **50** disposed on the water flowing route of the connecting pipe **6** and connected with the connecting pipe **6.** Also, a water feeding switch **51** is disposed on the water tank **50** to allow the water in the water tank **50** to flow into the connecting pipe **6,** wherein the water feeding switch **51** is kept being switched on for automatically filling water into the connecting pipe **6** due to a vacuum filling mechanism.

When the water level B stored within the base **2** is lower than the water level of the connecting pipe **6** due to water evaporation, the water tank **50** automatically refill water into the connecting pipe **6** to keep the connecting pipe **6** to containing water. When the water content in the water tank **50** is insufficient, the water feeding switch **50** is allowed to be temperately switched off for the user to refill the water in the water tank **50.** Thus, through the automatic water refilling mechanism of the water tank **50** toward the connecting pipe **6,** function of all the bug-proof and odor-proof drainage devices A is maintained.

In sum, the bug-proof and odor-proof drainage device of the present invention is provided with the cover having the capping which cooperates with the base having the through hole and the wall part. By use of the water stored in the base, a blockage function is achieved to prevent bugs and odor entering through the draining holes, realizing the bug-proof and odor-proof effect.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A bug-proof and odor-proof drainage device (A), comprising:
a base (2) embedded in a recess (4), the base (2) having a through hole (21) for connecting a draining pipe (5), the through hole (21) surrounded by a wall part (22) extending upward; and
a capping (12) for masking the wall part (22), the top edge of the wall part (22) is higher than the bottom edge of the capping (12),
wherein when water flows into the base (2), the water circuitously flow over the wall part (22) and flow into the draining pipe (5) from the through hole (21) along the wall part (22), such that a portion of the water is stored within the base (2) and forms a level of water content.

2. The bug-proof and odor-proof drainage device (A) of claim 1, further comprising a cover (1) having a plurality of draining holes (11), wherein the cover (1) is placed on the base (2), such that water flows into the base (2) through the draining holes (11) of the cover (1).

3. The bug-proof and odor-proof drainage device (A) of claim 2, wherein the capping (12) is disposed on the bottom surface of the cover (1).

4. The bug-proof and odor-proof drainage device (A) of claim 3, further comprising a lid part (3) having an opening (31) for receiving the cover (1).

5. A bug-proof and odor-proof drainage system, comprising:
a plurality of bases (2), each base (2) having a through hole (21) connected to a draining pipe (5), each through hole (21) surrounded by a wall part (22) extending upward;
a plurality of covers (1), each cover (1) provided with a plurality of draining holes (11) arranged in intervals, the bottom surface of each cover (1) having a capping (12) for masking the wall part (22), the top edge of each wall part (22) is higher than the bottom edge of the corresponding capping (12);
a connecting pipe (6) connected to each of the bases (2); and
a water tank (50) disposed on the water flowing route of the connecting pipe (6) and connected to the connecting pipe (6).

6. The bug-proof and odor-proof drainage system of claim 5, wherein the water tank (50) is provided with a water feeding switch (51) which is kept being switched on.
